# EUROPEAN PATENT APPLICATION

(11) **EP 1 435 539 A1**
(43) Date of publication of application: **07.07.2004**
(21) Application number: 02779900.6
(22) Date of filing: 27.09.2002
(51) Int. Cl.: G02F 1/1368

(54) **LIQUID CRYSTAL DISPLAY UNIT**

(30) Priority: 28.09.2001 JP 2001300778; 19.11.2001 JP 2001353004
(71) Applicant: Sanyo Electric Co., Ltd., Moriguchi-shi, Osaka 570-0083 (JP); Tottori Sanyo Electric Co., Ltd., Tottori-shi, Tottori 680-8634 (JP)
(72) Inventor: Tanaka, Shinichiro Tottori Sanyo Electric Co. Ltd., Tottori-shi Tottori 680-8634 (JP); Kinoshita, Takuo Tottori Sanyo Electric Co. Ltd., Tottori-shi Tottori 680-8634 (JP); Kobayashi, Osamu Tottori Sanyo Electric Co. Ltd., Tottori-shi Tottori 680-8634 (JP)
(74) Representative: Glawe. Delfs. Moll
(86) International application number: PCT/JP2002/010138
(87) International publication number: WO 2003/029891

(57) **Abstract**

On a substrate of a liquid crystal display device, there are arranged pixel electrodes (6) in a matrix-like formation, TFTs (7) connected to the pixel electrodes (6), video lines (5) and scan lines (2) both of which connected the TFTs (7), and a protective film interposed between the video lines (5) and the pixel electrodes (6). On the substrate, two video lines (5) are laid side by side between the pixel electrodes, and grooves (22) are formed in the protective film between the adjacent video lines (5). Video lead-out lines and scan lead-out lines are arranged in a similar manner.

## Description

### Technical field

The present invention relates to a liquid crystal display device with improved yields that are achieved by preventing a short circuit of wiring lines within a display area and of lead-out lines.

### Background art

In general, a liquid crystal display device has the advantages of being slim and lightweight and consuming low electric power, and is widely used in appliances ranging from portable terminals to large-screen television monitors. A TFT-type liquid crystal display ranks as the dominant liquid crystal display technology in which a TFT is provided as a switching element for each pixel electrode. In this structure, a plurality of scan lines and a plurality of video lines are laid on a glass substrate so that the scan lines and the video lines intersect each other at right angles, and the TFTs are provided their intersects. At the same time, the scan lines, a gate insulation film, the video lines, and a protective film are laid on the glass substrate in this order. The pixel electrodes are formed on the insulation film or on the protective film. Gate electrodes of the TFTs are connected to the scan lines electrically, source electrodes are connected to the video lines electrically, and drain electrodes are connected to the pixel electrodes electrically. The scan lines, the video lines, and the pixel electrodes are formed by laying a metallic material on an entire surface of the glass substrate, performing a patterning process through a method such as photolithography, and removing unnecessary portions through an etching process. During these processes, if a part of the unnecessary portions is left unetched, this remaining part and one of lines are short-circuited, which causes a displaying failure.

As a measure to cope with a problem like this, conventionally, the short-circuited portions are separated through such a method as irradiating a laser beam on the unnecessary portion during a repair process which is conducted after the patterning process.

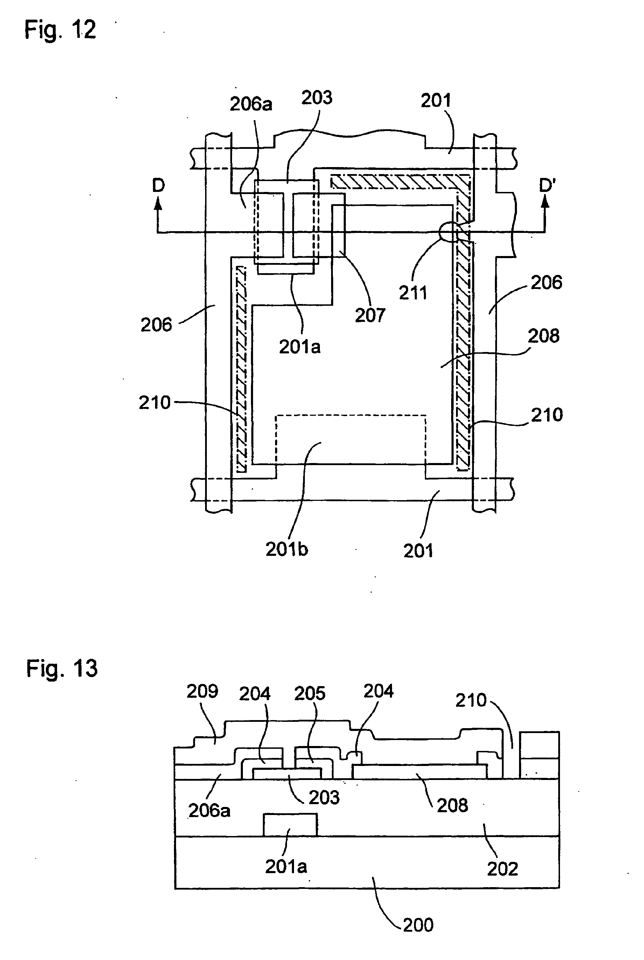

Japanese Patent No. 2738289 and Domestic Re-publication of PCT International Patent Application No. WO96/26463 disclose a structure as another measure to cope with the problem. This structure will be described with reference to Fig. 12 and Fig. 13. Fig. 12 is a simplified plan view showing a pixel area, and Fig. 13 is a cross sectional view showing a cross section along a chain double-dashed line shown in Fig. 12.

Scan lines 201 are patterned on a glass substrate 200 and a gate insulation film 202 is laid on the scan lines 201. A gate electrode 201 a of a TFT and an auxiliary capacitance electrode 201b are protruding from the scan lines 201. Reference numeral 203 represents a semiconductor layer formed on the gate insulation film 202 so as to face the gate electrode 201a, and a source region 204 and a drain region 205 are arranged on the semiconductor layer 203. Video lines 206 are patterned on the gate insulation film 202 in such a way that the video lines 206 and the scan lines 201 intersect with each other at right angles, and a source electrode 206a to be connected to the source region 204 protrudes from the video lines 206. Reference numeral 207 represents a drain electrode to be connected to the drain region 205 and a pixel electrode 208, and is formed of the same material as the source electrode 206a simultaneously therewith. In this example, the pixel electrode 208 is formed on the gate insulation film 202 as is the case for the video lines 206. Reference numeral 209 represents a protective film for covering the video lines 206 and the pixel electrode 208, and is provided with a slit 210 in a corresponding region between the pixel electrode 108 and each of the video lines 206.

When, for example, the etching for the video lines 206 is insufficient, a residue 211 causes a short circuit between one of the video lines 206 and the pixel electrode 208. However, it is possible, by forming the slit 210 and performing an etching process thereafter, to remove the residue 211 left in the slit 210 and disconnect a portion of the residue 211 left on the pixel electrode 208 from the video line 206. In other words, even if a video line and a pixel electrode are short-circuited together by a residue, it is possible to remove the residue by forming a slit between the video line and the pixel electrode.

In general, the scan lines and the video lines are formed by using Al or Cr, the pixel electrodes are formed by using ITO (Indium Tin Oxide), and the protective film is formed as an inorganic insulating film including Si in many cases. Therefore, it is impossible to etch such metals as Al or Cr, and ITO (Indium Tin Oxide) simultaneously by using an etchant suitable for etching the protective film. Consequently, according to the conventional structure, it is necessary to perform an etching process for removing residues that are left in the slits after the slits are formed in a protective film so that the residues are disconnected from each of wiring lines, which eventually increases the manufacturing steps. Particularly, if the scan lines, video lines, and pixel electrodes are formed by using a material different from each other, a plurality of etching processes are required to remove the residues from the slits, because there is not such an etchant suitable for removing all of the materials including Al, Cr, and ITO.

Furthermore, even if a residue of a line or the like is not directly connected to another line, it is possible that the residue comes in close proximity to another line by sandwiching a protective film therebetween and this may cause the jumping of electricity between the residue and the line, resulting in a state of short circuit. Therefore, it is desirable that the residues be disconnected from the line where possible. This also applies to residues of the scan lines. In order to cope with the residues of the scan lines, it is necessary to extend a slit formed in the protective film as deep as into a gate insulation film. However, there is a case in which a light-shielding film is formed between the pixel electrodes and the video lines in plan view and in the same plane with the scan lines. In this structure, it is not possible to form the slit in an appropriate position, because the light-shielding film and the slit overlap with each other.

Furthermore, scan lead-out lines extending from the scan lines and video lead-out lines extending from the video lines are formed on the substrate outside a pixel area comprising a plurality of pixels so that signals from a driver circuit are fed to the scan lines and the video lines. There is a possibility that the lead-out lines are short-circuited with one another through residues left as a result of an insufficient etching process. However, the above mentioned references do not provide any solutions to this problem.

### Disclosure of the invention

An object of the present invention is, in light of the above-mentioned problems, to provide a liquid crystal display device that can be produced through simple manufacturing processes in which residues of wiring lines inside and outside of a pixel area can be reliably disconnected from the wiring lines so that the liquid crystal display device offers optimum display result.

To achieve the above object, according to the present invention, in a liquid crystal display device that is provided with a pair of substrates having liquid crystal sealed therebetween, pixel electrodes arranged in a matrix-like formation on one of the substrates, switching elements connected to the pixel electrodes, a plurality of video lines connected to the switching elements and laid substantially parallel to one another, a plurality of scan lines connected to the switching elements and laid perpendicular to the video lines, and a protective film interposed between the video lines and the pixel electrodes, two video lines are laid side by side between the pixel electrodes, and a groove is formed in the protective film between the two adjacent video lines.

According to the present invention, in a liquid crystal display device that is provided with a pair of substrates having liquid crystal sealed therebetween, pixel electrodes arranged in a matrix-like formation on one of the substrates, switching elements connected to the pixel electrodes, a plurality of video lines connected to the switching elements and laid substantially parallel to one another, a plurality of scan lines connected to the switching elements and laid perpendicular to the video lines, and a protective film interposed between the video lines and the pixel electrodes, a first groove is formed substantially parallel to the video lines in the pixel electrode near edges thereof, and a second groove is formed in the protective film at a place corresponding to the first groove.

According to the present invention, in a liquid crystal display device that is provided with a plurality of wiring lines comprising a conductive material and formed on one of substrates, a protective film and an insulation film laid on the wiring lines, a pixel area comprising a plurality of pixels each of which having a pixel electrode, and another of the substrates facing said one of the substrates with liquid crystal sandwiched therebetween, grooves are formed in the protective film or both in the protective film and the insulation film next to the wiring lines outside the pixel area on said one of the substrates.

According to the present invention, in a liquid crystal display device that is provided with a pair of substrates having liquid crystal sealed therebetween, a plurality of wiring lines comprising a conductive material and formed on one of said pair of substrates, lead-out lines extending from the wiring lines to driving circuits for feeding signals to the wiring lines, a protective film and an insulation film laid on the lead-out lines, and a pixel area comprising a plurality of pixels, the lead-out lines are formed outside the pixel area, and grooves are formed in the protective film or both in the protective film and the insulation film next to the lead-out lines.

According to the present invention, a liquid crystal display device is produced by forming a plurality of scan lead-out lines by using a conductive material on an insulating substrate, forming an insulation film on the insulating substrate and the scan lead-out lines, forming a plurality of video lead-out lines by using the conductive material on the insulation film, laying a protective film on the insulation film and the video lead-out lines, forming, next to the scan lead-out lines, grooves penetrating through the insulation film and the protective film, forming, next to the video lead-out lines, grooves penetrating through the protective film, and forming, on the protective film, a transparent film possessing conductivity, wherein the conductive materials exposed in the grooves formed next to the scan lead-out lines and in the grooves formed next to the video lead-out lines are removed by etching.

### Brief description of drawings

Fig. 1 is a plan view of a first substrate having a pixel electrode of a first embodiment of the invention.
Fig. 2 is a simplified sectional view taken along line A-A' shown in Fig. 1.
Fig. 3 is a view schematically showing a positional relationship between the pixel electrode and projections.
Fig. 4A is a view for describing a first step for forming layers on the first substrate of the first embodiment.
Fig. 4B is a view showing a second step.
Fig. 4C is a view showing a third step.
Fig. 4D is a view showing a fourth step.
Fig. 4E is a view showing a fifth step.
Fig. 4F is a view showing a sixth step.
Fig. 5 is a plan view of a first substrate having a pixel electrode of a second embodiment of the invention.
Fig. 6 is a simplified sectional view taken along line B-B' shown in Fig. 5.
Fig. 7A is a view for describing a first step for forming layers on the first substrate of the second embodiment.
Fig. 7B is a view showing a second step.
Fig. 7C is a view showing a third step.
Fig. 7D is a view showing a fourth step.
Fig. 7E is a view showing a fifth step.
Fig. 7F is a view showing a sixth step.
Fig. 8 is an enlarged plan view of a first substrate of a third embodiment.
Fig. 9 is an enlarged plan view of a perimeter of display area relating to the third embodiment.
Fig. 10 is an enlarged plan view of areas surrounding a terminal portion relating to the third embodiment.
Fig. 11A is a view for describing a first step for forming layers on the first substrate taken along line C-C' shown in Fig. 8.
Fig. 11B is a view showing a second step.
Fig. 11C is a view showing a third step.
Fig. 11D is a view showing a fourth step.
Fig. 11E is a view showing a fifth step.
Fig. 11F is a view showing a sixth step.
Fig. 12 is a plan view of a substrate having a pixel electrode of a conventional liquid crystal display device.
Fig. 13 is a simplified sectional view taken along line D-D' shown in Fig. 12.

### Best mode for carrying out the invention

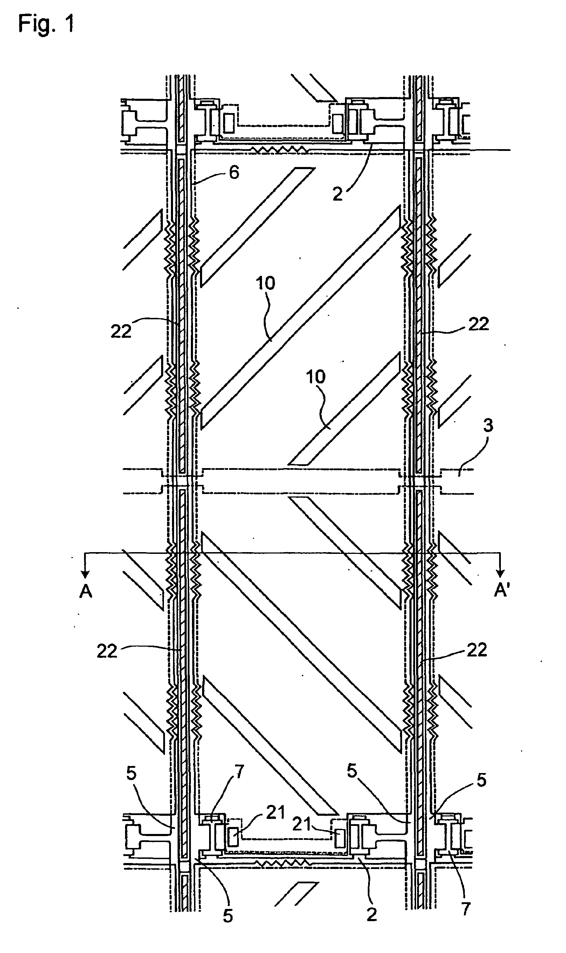

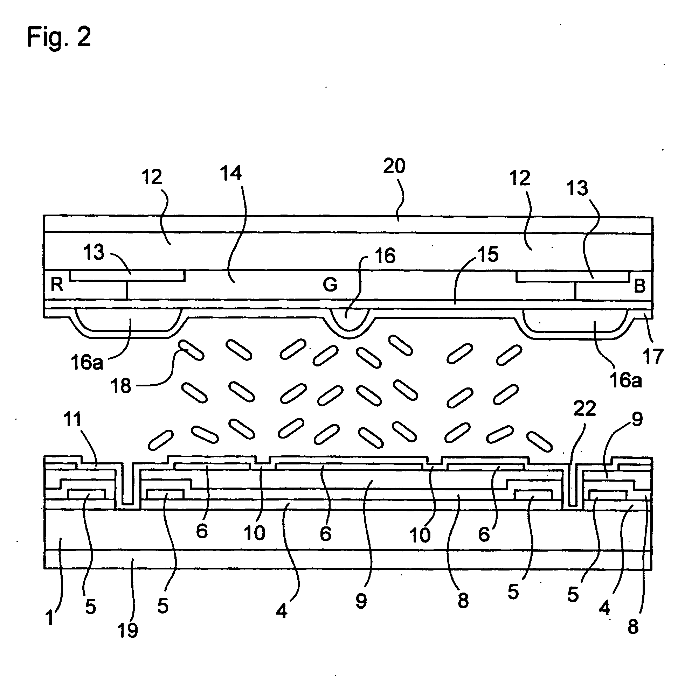

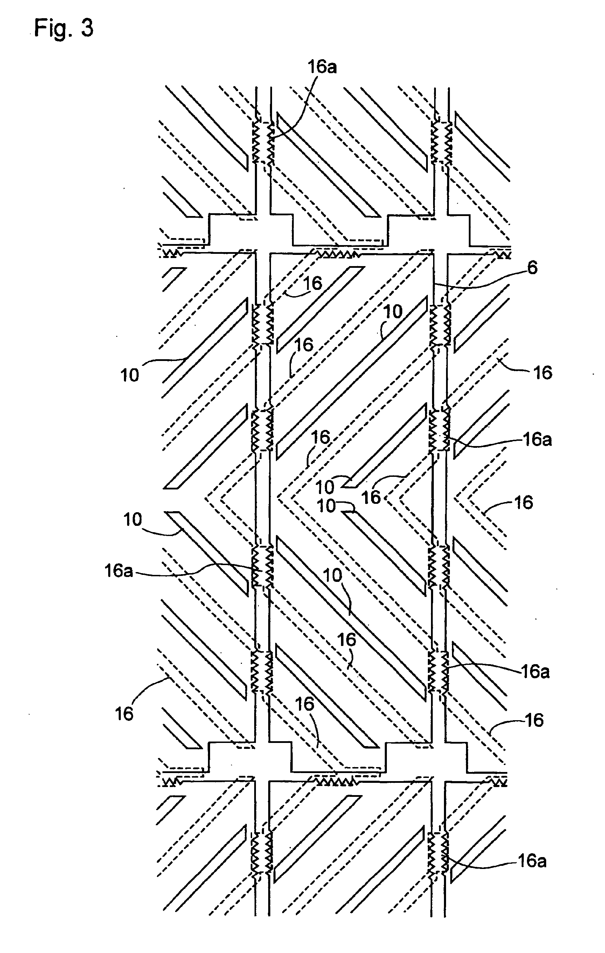

Hereinafter, a first embodiment of the present invention will be described with reference to the drawings. Fig. 1 is a plan view of a first substrate having a pixel electrode, Fig. 2 is a sectional view taken along line A-A' shown in Fig. 1, and Fig. 3 is a view schematically showing a positional relationship between projections and slits within a pixel area. Here, this embodiment is based on an MVA (multi-domain vertically aligned)-type.

Reference numeral 1 represents a first substrate which is a transparent substrate of, for example, glass. Reference numeral 2 represents scan lines formed of Al or the like, and reference numeral 3 represents auxiliary capacitance electrode lines formed simultaneously with the scan lines 2. On this first substrate 1, the scan lines 2 and the auxiliary capacitance electrode lines 3 are laid in parallel at substantially constant intervals from each other. Reference numeral 4 represents a gate insulation film laid on top of the scan lines 2 and the auxiliary capacitance electrode lines 3, and video lines 5 are formed on top of the gate insulation film 4 by using Al or the like. The video lines 5 are arranged so that the video lines 5 intersect with the scan lines 2 at right angles, and an area surrounded by the scan lines 2 and the video lines 5 corresponds to a pixel. For each pixel, there are provided a pixel electrode 6 formed of IZO (Indium Zinc Oxide) or the like and a TFT 7 that is placed at a junction between each of the scan lines 2 and each of the video line 5 as a switching element. In this embodiment, two video lines 5 are provided for one pixel and two TFTs 7 are connected to one pixel electrode 6. As a result of this arrangement, in the fabrication process, even if one TFT 7 happens to be defective, the pixel electrode 6 can be operated by way of the other TFT 7. This ensures an improved yield of the product.

Reference numeral 8 represents a first protective film that covers the video lines 5 and the TFTs 7, reference numeral 9 represents a second protective film laid on top of the first protective film 8, and the pixel electrodes 6 are formed on top of the second protective film 9. For example, the second protective film 9 may be given a flat surface so as to act as a flattening film. Alternatively, the first protective film 8 may be formed as an inorganic insulating film and the second protective film 9 as an organic insulating film. Through the two protective films 8 and 9, there are formed contact holes 21 in portions thereof corresponding to the drain electrode of the TFT 7, and, through these contact holes 21, the pixel electrode 6 and the drain electrode are electrically connected together. On the gate insulation film 4, there is formed an insular electrode (not shown) in a portion thereof facing the auxiliary capacitance electrode line 3. The insular electrode is formed of the same material and at the same time as the video lines 5. The insular electrode is electrically connected, through the contact holes formed in the two protective films 8 and 9, to the pixel electrode 4 so that the insular electrode and the auxiliary capacitance electrode line 3 together produce auxiliary capacitance in each pixel.

Edge portions of the pixel electrode 6, as observed from the direction normal to the first substrate 1, partially overlap with the scan line 2 and the video line 5. Within each pixel electrode 6, there are formed a plurality of slits 10. The slits 10 are formed by removing parts of the pixel electrode 6 through a process such as photolithography and are arranged substantially parallel to the adjacent slits 10. In this embodiment, the slits 10 extend in directions 45° to the video line 5 and extend in directions deviated by 90° therefrom at the auxiliary capacitance electrode line 3 serving as a boundary. Among the edges of the pixel electrode 6, parts where liquid crystal molecules are more likely to be misaligned according to the position thereof relative to the slits 10, are formed in a sawtooth shape. Accordingly, edge portions of the video line faced therewith are also formed in a sawtooth shape. Reference numeral 11 represents an alignment film that covers the pixel electrode 6 and that is subjected to vertical alignment treatment.

Reference numeral 22 represent grooves formed between adjacent video lines 5. In Fig. 1, the grooves 22 are shown in the hatch lines. The grooves 22 are arranged continuously through the gate insulation film 4 and the two protective films 8 and 9. In addition, the grooves 22 are formed along the video lines 5 with both ends thereof located close to the scan lines 2 or the auxiliary capacitance electrode lines 3. Accordingly, if residues of the scan lines 2 or the video lines 5 are left in the grooves 22, the residues left in the grooves 22 are etched simultaneously with the etchant that is used for forming the pixel electrode 6, and the residues are disconnected from the scan lines 2 or the video lines 5. Because, in general, Al, Cr, and ITO can not be etched by using the same etchant, and Al and IZO can be etched by using the same etchant, it is possible to etch the residues, without arranging an additional manufacturing process, by forming the scan lines 6 and the video lines 5 by using Al and forming the pixel electrodes 6 by using IZO.

Reference numeral 12 represents a second substrate which is a transparent substrate of, for example, glass. On the second substrate 12, there are formed black matrixes 13 so as to separate the individual pixels, and there are laid color filters 14 so as to correspond one-to-one to the pixels. The color filter 14 is of one of red (R), green (G), and blue (B) colors depending on the location of the corresponding pixels. On the color filter 14, there is laid a transparent electrode 15 of, for example, ITO, IZO, or the like, and, on the transparent electrode 15, there are formed projections 16 in a predetermined pattern. The projections 16 are formed, for example, by forming a resist of acrylic resin into a predetermined pattern through a process of photolithography. When observed from the direction normal to the second substrate 12, the projection 16 is positioned substantially in between the slits 10 and parallel to the slits 10 adjacent thereto in each pixel. The projections 16, as is the case for the slits 10, extend in directions deviated by 90° at the auxiliary capacitance electrode line 3 serving as a boundary, and, at the edge portions of the pixel electrode 16, projections 16a extend along the edges thereof. The transparent electrode 15 and the projections 16 are covered with an alignment film 17 that is subjected to vertical alignment treatment.

Between the two substrates 1 and 12, there is interposed a liquid crystal layer comprising liquid crystal molecules 18 having negative dielectric constant anisotropy. In each pixel, when no electric field is present between the pixel electrode 6 and the transparent electrode 15, the liquid crystal molecules 18 are aligned vertically by being restricted by the alignment films 11 and 17. When an electric field is present between the pixel electrode 6 and the transparent electrode 15, the liquid crystal molecules 18 are inclined in the horizontal direction. At this time, the liquid crystal molecules 18 are inclined in predetermined directions by being restricted by the silts 10 and the projections 16 so as to form a plurality of domains within a single pixel. Fig. 2 schematically shows the state in which an electric field is present between the pixel electrode 6 and the transparent electrode 15.

A first polarizer 19 is laid on the outside of the first substrate 1, and a second polarizer 20 is laid on the outside of the second substrate 12. The first and second polarizers 19 and 20 are so arranged that their transmission axes are perpendicular to each other. When the transmission axes of the polarizers 19 and 20 are at about 45° to the direction in which the liquid crystal molecules 18 are inclined as observed from the direction normal to the second substrate 12, transmission light is transmitted through the second polarizer 20 most efficiently. Since the liquid crystal molecules 18 are inclined at about 90° to the projections 16 and slits 10, the two polarizers 19 and 20 are so arranged that the transmission axis of the second polarizer 20 is at about 45° to the direction in which the slits 10 and the projections 16 extend within the pixel. In this embodiment, the transmission axis of the first polarizer 19 coincides with the direction in which the scan lines 2 extend, and the transmission axis of the second polarizer 20 coincides with the direction in which the video lines 5 extend.

When no electric field is present between the pixel electrode 6 and the transparent electrode 15, the liquid crystal molecules 18 are aligned vertically. Thus, the linearly polarized transmission light that has been transmitted through the first polarizer 19 is transmitted through the liquid crystal layer comprising the liquid crystal molecules 18 intact, i.e., as linearly polarized light, and is then shielded by the second polarizer 20, resulting in black display. On the other hand, when a predetermined voltage is applied to the pixel electrode 6 and an electric field appears between the pixel electrode 6 and the transparent electrode 15, the liquid crystal molecules 18 are inclined in the horizontal direction. Thus, the linearly polarized transmission light that has been transmitted through the first polarizer 19 is converted into elliptically polarized light by the liquid crystal layer comprising the liquid crystal molecules 18, and is then transmitted through the second polarizer 20 so as to be displayed in a color of the color filter 14.

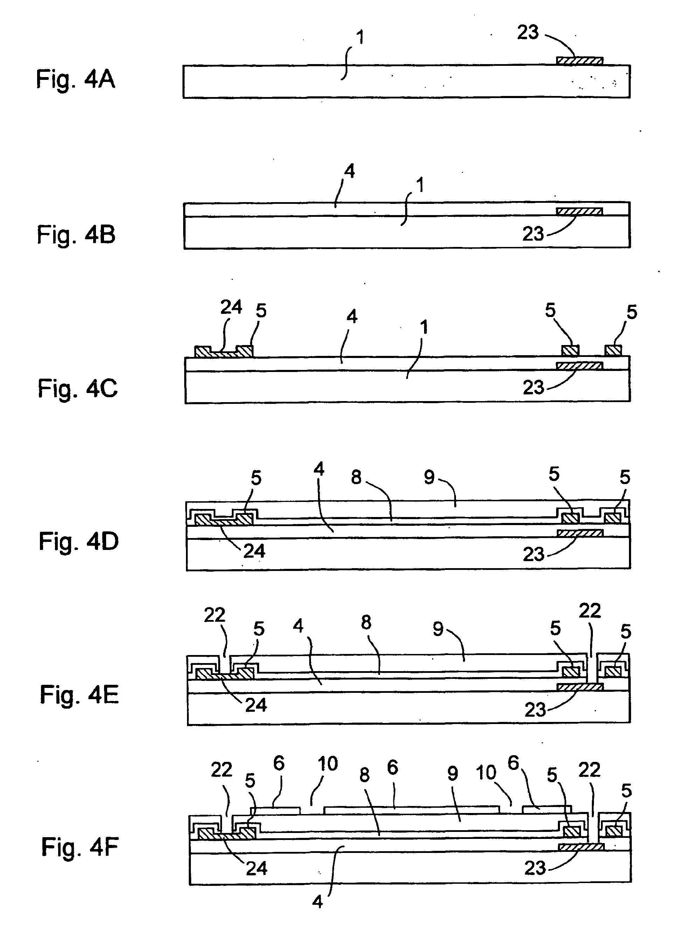

Next, processes for forming individual layers on the first substrate I are described with reference to Fig. 4A to Fig. 4F. Fig. 4A shows a process of forming the scan lines 2 and the auxiliary capacitance electrode lines 3 by forming a layer of Al on the glass substrate 1 followed by exposure and etching steps. Fig. 4A shows a cross sectional portion in which the scan lines 2 and the auxiliary capacitance electrode lines 3 do not exist and shows reference numeral 23 that represents a residue left as a result of faulty etching. Fig. 4B shows a process of forming an insular semiconductor layer (not shown) in an area facing the gate electrode by laying the gate insulation film 4 on top of the scan lines 2 or the like. Fig. 4C shows a process of forming the video lines 5, the source electrodes, the drain electrodes, and the like by laying a layer of Al on top of the gate insulation film 4 followed by exposure and etching. Here, reference numeral 24 represents a residue left as a result of faulty etching, and the adjacent video lines 5 are short-circuited together by the residue 24. Fig. 4D shows a process of laying the first protective film 8 and the second protective film 9 on top of the gate insulation film 4 and the video line 5. Fig. 4E shows a process of forming the contact hole 21 (not shown) and the grooves 22 in a predetermined area in the two protective films 8 and 9, or the gate insulation film 4 by performing an etching step. In this case, since an etchant used for etching the protective films 8 and 9 can not etch the residues 23 and 24 that are formed of Al, the residues 23 and 24 are left intact and exposed in the grooves. Fig. 4F shows a process of laying IZO on the second protective film 9 and forming the pixel electrode 6 in a predetermined shape by performing exposure and etching steps. At this time, since the etchant used for removing IZO can also remove Al, the residues 23 and 24 left in the grooves 22 are removed. Thereafter, the alignment film 11 is laid on top of the pixel electrode 6 and the second protective film 9.

As described, according to the present invention, an additional process for removing the residues left in the grooves 22 is not required, because, during the process for forming the pixel electrode 6, the residues left in the grooves are removed. Although the example described above is for forming the scan lines 2 and the video lines 5 by using Al, a multilayer structure using Al, Mo, or the like is also possible if compatibility in electrical connection with IZO is taken into account.

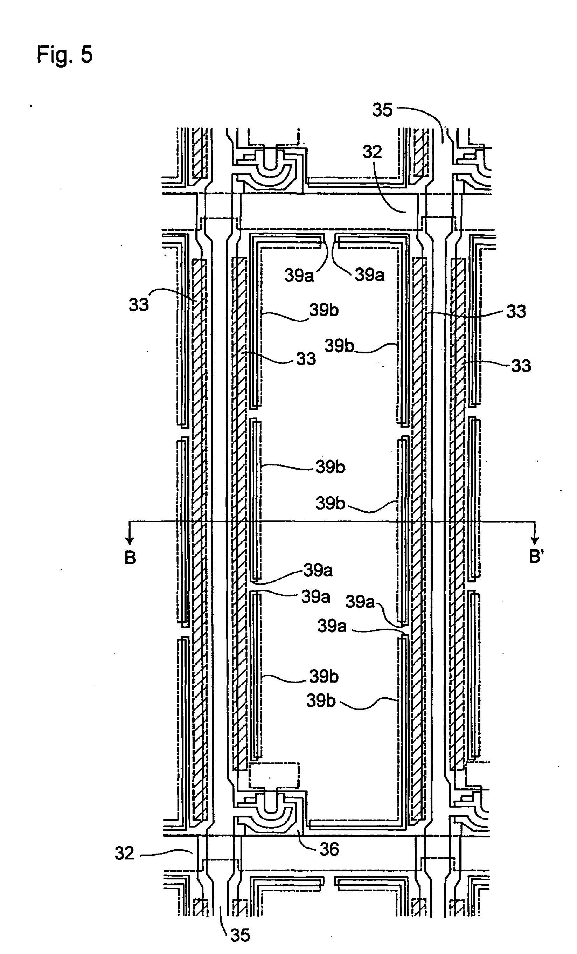

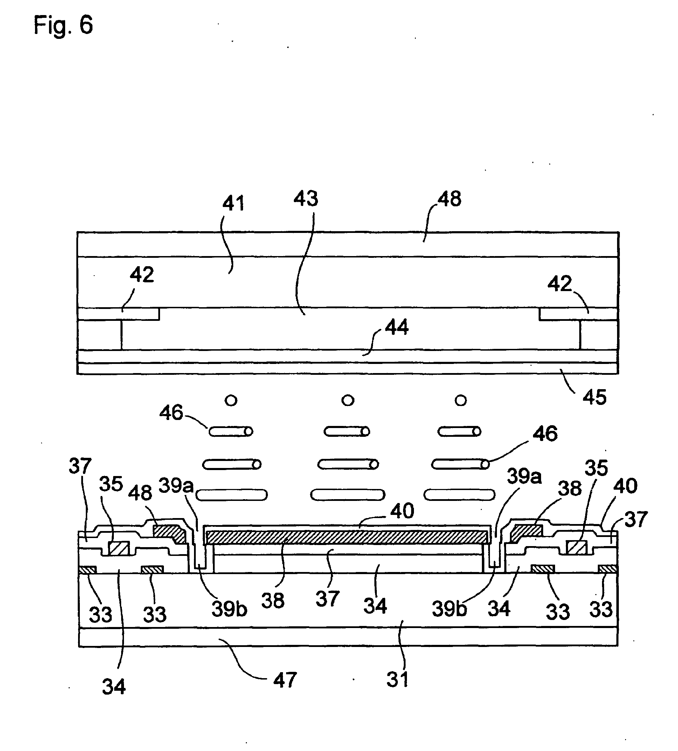

Next, a second embodiment will be described with reference to the drawings. Fig. 5 is a plan view of the first substrate, and Fig. 6 is a simplified cross sectional view taken along line B-B' shown in Fig. 5. Here, this embodiment is based on a TN (twisted nematic)-type liquid crystal.

Reference numeral 31 represents a first substrate comprising a transparent glass substrate or the like, and reference numeral 32 represents a scan line formed on the first substrate 31. The scan line 32 is formed of Al and a plurality of scan lines 32 are laid parallel to one another. Reference numeral 34 is a gate insulation film that is laid on the first substrate 31 and the scan lines 32. Reference numeral 35 represents video lines formed on top of the gate insulation film 34 by using Al or the like and are laid perpendicular to the scan lines 32. At the intersections between the scan lines 32 and the video lines 35, there are formed TFTs 36 which are switching elements that are configured as described hereinafter. A gate electrode protruding from each of the scan lines 32 is covered by the gate insulation film 34 on which a semiconductor layer is laid so as to face the gate electrode. On top of the semiconductor layer, a source region and a drain region are formed, and they are connected to a source electrode and a drain electrode respectively. The source electrode and the drain electrode are formed at the same time when the video lines 35 are formed, and the source electrode has a shape protruding from the video line 35. Reference numeral 37 represents a protective film that covers the video lines 35 and the gate insulation film 34, and a pixel electrode 38 is formed in an area surrounded by the scan lines 32 and the video lines 35 on top of the protective film 37. Reference numeral 33 represents a strip-shaped light-shielding film formed on the first substrate 31. The light-shielding film 33 prevents light from leaking through between the video line 35 and the pixel electrode 38 by being positioned between the video line 35 and the pixel electrode 38 and along the edges of the pixel electrode 38 as observed from the direction normal to the first substrate 31. In Fig. 5, the light-shielding film 33 is shown in the hatch lines. The light-shielding film 33 is formed of Al as is the case for the scan lines 32 and formed in the same process as and simultaneously with the scan lines 32. A first groove 39a as described later is formed in the pixel electrode 38, and a second groove 39b as described later is formed in the gate insulation film 34 and in the protective film 37. Reference numeral 40 represents an alignment film that covers the pixel electrode 38 and the protective film 37, and is subjected to alignment treatment in a direction, for example, parallel to the scan lines 32.

Reference numeral 41 represents a second substrate comprising a glass substrate or the like and is placed face to face with the first substrate at substantially a constant distance from each other. Reference numeral 42 represents black matrixes formed on the glass substrate so as to face the scan lines and the video lines. The black matrix 42 is formed of Cr or the like so as to separate the individual pixels. Reference numeral 43 is a color filter formed for each pixel. The color filter 43 is of one of red (R), green (G), and blue (B) colors depending on the location of the corresponding pixels. On the color filter 43, there is laid a transparent electrode 44 of, for example, ITO, IZO, or the like, and the transparent electrode 44 is covered by an alignment film 45. The alignment film 45 is subjected to alignment treatment in a direction perpendicular to a direction of alignment in which the alignment film 47 of the first substrate 31 is subjected to (i.e. in parallel to the video lines 35 in this embodiment).

A liquid crystal layer comprising liquid crystal molecules 46 having positive dielectric constant anisotropy is sandwiched between a pair of substrates 31 and 41. When no electric field is present between the pixel electrode 38 and the transparent electrode 44, the liquid crystal molecules 46 are twisted by 90° and aligned horizontally by being restricted by the alignment films 40 and 45. When an electric field is present between the pixel electrode 38 and the transparent electrode 44, the liquid crystal molecules 46 are inclined in the vertical direction along the electric field. Fig. 5 schematically shows the state in which an electric field is not present between the pixel electrode 38 and the transparent electrode 44.

A first polarizer 47 is laid on the outside of the first substrate 31, and a second polarizer 48 is laid on the outside of the second substrate 41. The first and second polarizers 47 and 48 are so arranged that their transmission axes are perpendicular to each other. At the same time, the direction of the transmission axis of the first polarizer 47 and the alignment direction of the alignment film 40 are so arranged to coincide with each other, and the direction of the transmission axis of the second polarizer 48 and the alignment direction of the alignment film 45 are so arranged to coincide with each other. When no electric field is present, light that has been transmitted through the first polarizer 47 is transmitted through the liquid crystal layer while being twisted by 90° to the direction of amplitude, and is then transmitted through the second polarizer 48. On the other hand, when an electric field is present, light that has been transmitted through the first polarizer 47 is transmitted through the liquid crystal layer comprising the liquid crystal molecules 46 intact, and is then blocked by the second polarizer 48.

Next, structures of the first groove 39a and the second groove 39b will be described. Residues left as deep as below the pixel electrode 38 as a result of insufficient etching when the scan lines 32 and the video lines 35 were etched, are also etched in the portions left in the grooves 39a and 39b and removed therefrom when the pixel electrodes 38 are etched. For this reason, it is more efficient if the grooves 39a and 39b are located as closer as possible to the scan line 32 and the video line 35. On the other hand, it is difficult to position the grooves 39a and 39b at an appropriate place, because the light-shielding film 33 is laid between the video line 35 and the pixel electrode 38, and a part of the pixel electrode 38 and the scan line 32 of the adjacent pixel overlap with each other so as to form the auxiliary capacitance. Therefore, the grooves 39a and 39b are formed, within the pixel electrode 38, as closer as possible to the light-shielding film 33 or the scan line 32.

The first groove 39a of the pixel electrode 38 is formed in a long and narrow shape along the light-shielding film 33 and the scan lines 32, and is divided in a plurality of pieces. Dividing the first groove 39 into a plurality of pieces provides a several contact points through which the central portion and the edge portions of the pixel electrode 38 are electrically connected to each other so that the entire pixel electrode 38 can be maintained at the same potential. If the width of the first groove 39a is too wide, the restriction force exerted upon the liquid crystal molecules 46 is weakened. By contrast, if the width of the first groove 39a is narrow, a restriction force similar to that obtained without the first groove 39a can be maintained. Each of the second grooves 39b is formed in an area corresponding to each of the first grooves 39a. When both of the grooves 39a and 39b are formed, an outer side edge (an edge located closer to the scan line 32 or the video line 35) of the second groove 39b is positioned inwardly (towards the center side of the pixel) than the outer side edge (an edge located closer to the scan line 32 or the video line 35) of the first groove 39a. Because of this physical relationship, residues left inside the grooves 39a and 39b are reliably removed at least from the outer side edge portion of the second groove 39b. As a result, the first groove 39a of the pixel electrode 38 can be made narrower and the residues left in the grooves can be reliably removed.

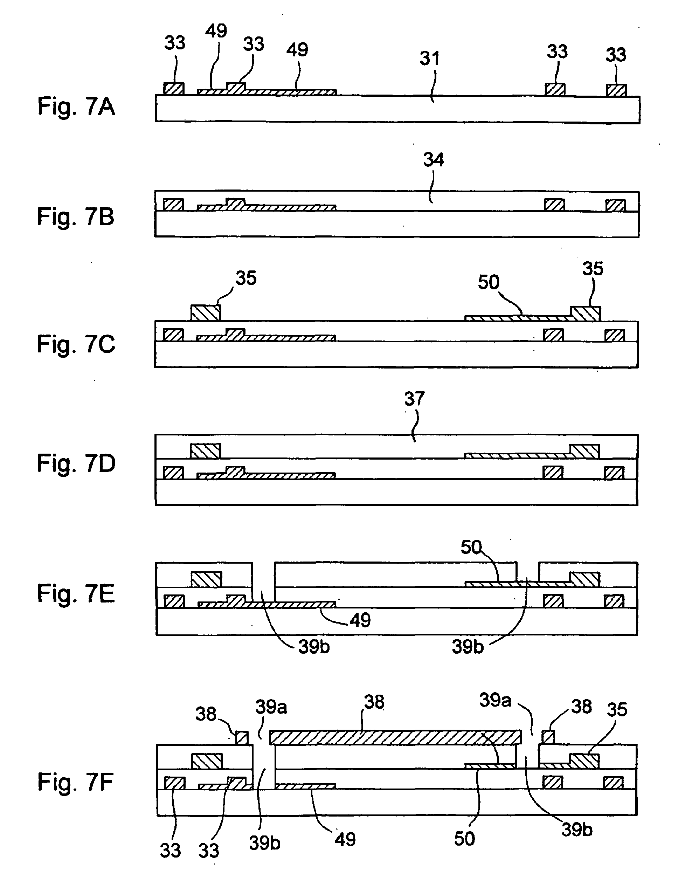

Next, a process of forming layers on the first substrate 31 will be described with reference to Fig. 7A to Fig. 7F. In Fig. 7A, first, Al is laid on the first substrate 31 and, then, the scan lines 32 (not shown) and the light-shielding films 33 are formed through patterning and etching methods. Reference numeral 49 represents a residue left due to insufficient etching and extends from the light-shielding film 33 towards surrounding areas thereof. Although voltage is not applied to the light-shielding film 33, if the residue 49 is located below the video line 35 and the pixel electrode 38, it is possible that the video line 35 and the pixel electrode 38 are short-circuited together by way of the residue 49. In Fig. 7B, the gate insulation film 34 is laid on the first substrate 31, the scan line 32 (not shown), and the light-shielding film 33. Then, after a semiconductor layer is laid on top of the gate insulation film 34, and an unillustrated insular-shaped semiconductor layer is cropped out through etching process at a place facing the gate electrode. In Fig. 7B, a portion in which the TFT 36 and the scan line 32 do not exist is shown in sectional view and, therefore, the scan line 32 and the semiconductor layer are not shown. In Fig. 7C, Al is laid on tope of the gate insulation film 34, and the video line 35 is formed. Reference numeral 50 represents a residue left due to insufficient etching and extends from the video line 35 as far as into the region of the pixel electrode 38 (Fig. 7F). In Fig. 7D, the protective film 37 is laid on the video line 35, for example, as an inorganic insulating film. In Fig. 7E, contact holes (not shown), the second grooves 39b, and the like are formed at predetermined places. In Fig. 7F, the pixel electrode 38 is formed by laying IZO on top of the protective film 37. In this step, although the first grooves 39a of the pixel electrode 38 are also formed by etching, the residues 49 and 50 left in the grooves 39a and 30b are, at the same time, also etched and removed, because Al can be etched by using the etchant that is used for IZO. Consequently, the residues 49 located below the pixel electrode 38 are disconnected from the light-shielding film 33, and the residues 50 located below the pixel electrode 38 are disconnected from the video line 35.

As described, since the grooves 39a and 30b are formed in an area inner side of the light-shielding film 33, the residues extending as far as below the pixel electrode 38 can be disconnected reliably from each wiring line, which contributes to maintaining a high display quality. Furthermore, it becomes possible to form the light-shielding film 33 or the like, because the grooves 39a and 30b are arranged in an area inner side of the light-shielding film 33.

In the first and second embodiments, the structures in which grooves for removing residues are formed within a pixel area are described. These grooves also work effectively if they are formed between wiring lines in an area outside of the pixel area. Next, a structure in which grooves are arranged in between wiring lines will be described.

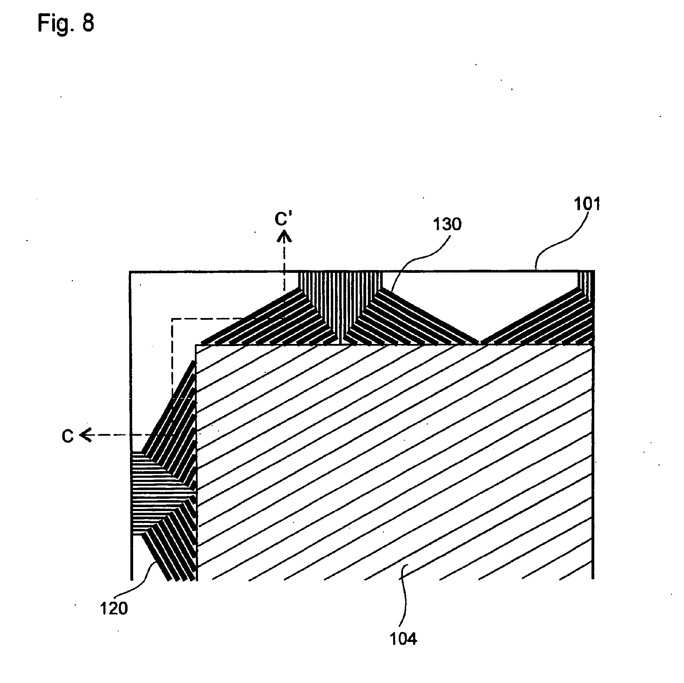

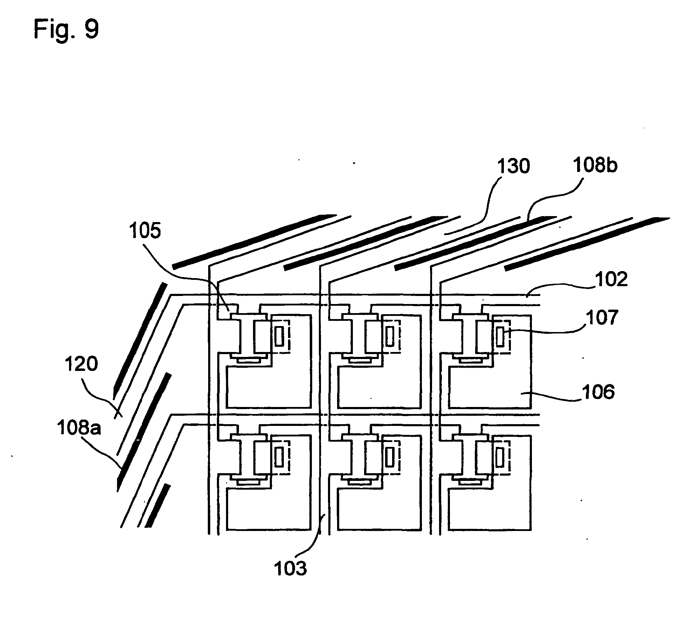

Here, a third embodiment will be described with reference to the drawings. Fig. 8 is an enlarged plan view of a first substrate on which a pixel area is formed. Fig. 9 is an enlarged plan view of perimeters of the pixel area shown in Fig. 8.

Reference numeral 101 represents a first substrate which is an insulating and transparent substrate such as a glass substrate or the like. On this first substrate 101, scan lines 102 made of a conductive material such as Al are laid parallel to and at substantially constant intervals from one another. A gate insulation film is laid on the first substrate 101 and the scan lines 2. Video lines 103 formed of such a conductive material as Al are arranged on the gate insulation film.

A pixel area 104 (shown in the hatch lines in Fig. 8) comprises a plurality of pixels. The scan lines 102 and the video lines 103 are laid so as to intersect with each other orthogonally, and a region surrounded by the scan lines 102 and the video lines 103 corresponds to a single pixel. For each pixel, a TFT 105 as a switching element is provided at an intersection between the scan line 102 and the video line 103. A pixel electrode 106 comprising such a transparent electrode as IZO is arranged on a protective film comprising an insulating film that covers the video lines 103 and the TFTs 105. A drain electrode of the TFT 105 and the pixel electrode 106 are connected together electrically by way of a contact hole 107 that is formed through the protective film. Here, the pixel area 104 also includes such pixels as so-called dummy pixels which are not actually used for displaying purpose. Hereinabove, although the structure of the pixel area has been briefly described, the pixel area can be formed in such a structure as in the first and the second embodiments.

Scan lead-out lines 120 and video lead-out lines 130 extend from the scan lines 102 and the video lines 103 to a driving circuit (not shown) and are formed respectively as extensions thereof in an area outside the pixel area 104. The driving circuit is for feeding signals for operating the TFTs 105 through the scan lines 102 and the video lines 103. It is possible to use a single driving circuit arranged for a plurality of scan lines 102 and feed the signals through all of the scan lines 102, or it is also possible to use a plurality of driving circuits for feeding signals to the grouped scan lines 102. Although, in this embodiment, the scan lines 102 or the like and the scan lead-out lines 120 or the like are formed integrally, it is also possible to form them separately by using different conductive materials and connect them together through electrical contacts.

In this embodiment, a plurality of driving circuits are used for the video lines 103, and the video lead-out lines 130 extending from the individual video lines 103 are so arranged to converge on the corresponding driving circuit. For this reason, gaps between adjacent video lead-out lines 130 are made smaller. Moreover, the larger the liquid crystal display device becomes in size, the more seriously the resistance of wiring that is formed on the substrate matters. Because of this reason, in addition to using, as a wiring material, Al which is low in resistance, the width of the lead-out lines are made as wide as possible. However, if the width of, for example, the video lead-out lines 130 are made wider, gaps lying between the adjacent video lead-out lines 130 become smaller. Furthermore, a smaller pixel size resulted from a higher resolution of the liquid crystal display device, regardless of the size of the liquid crystal display device itself, makes the gaps lying between the video lead-out lines 130 smaller. Therefore, it is highly possible that a short circuit is caused between the adjacent video lead-out lines 130 by a residue left during the etching process.

However, in the embodiment of the invention, grooves 108b are provided in the protective film laid on the video lead-out lines 130 and at a place next thereto. The grooves 108b pass through vertically at least the protective film that is laid on the video lead-out lines 130. Providing the grooves 108b makes it possible to expose a residue which is otherwise covered by the protective film and which causes a short circuit between the adjacent video lead-out lines 130 laid on the gate insulation film. Accordingly, even if a residue exists in between the adjacent video lead-out lines and causes a short circuit therebetween, it is possible to remove the residue through the grooves 108b and prevent the short circuit by performing an etching process after forming the grooves 108b. The same structure as explained about the video lead-out lines 130 is applied to the scan lead-out lines 120, and, therefore, similar grooves 108a penetrating through the protective film and the gate insulation film are formed next to the scan lead-out lines 120.

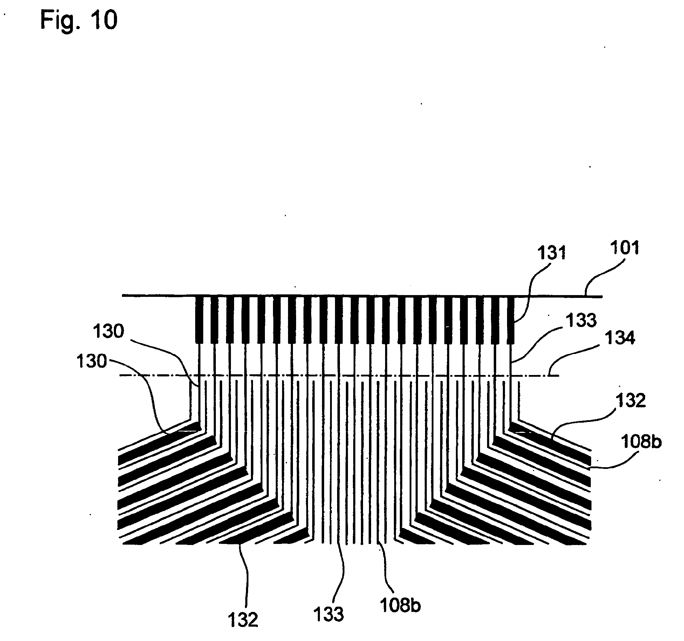

Fig. 10 is an enlarged plan view of the video lead-out lines 130 surrounding terminals 131. The terminals 131 are formed on the first substrate 101. The terminals 131 are provided for the individual video lead-out lines 130 and formed on the protective film laid on the video lead-out lines 130 by using, for example, IZO, an identical conductive material which is used for the pixel electrode 106. At the same time, the terminals 131 are connected to the video lead-out lines 130 by way of contact holes (not shown) that are formed through the protective films. Therefore, the video lead-out lines 130 and the driving circuits are connected electrically by way of the terminals 131. Here, as the connection method, it is possible to use a connection type such as so-called COG (Chip On Glass) or TCP (Tape Carrier Package) that is produced according to a so-called TAB (Tape Automatic Bonding)-type. Although the video lead-out lines 130 are connected to the driving circuits by way of the terminals 131 in this embodiment, it is also possible, for example, to form the driving circuits directly on the first substrate 101 and connect the video lead-out lines 130 directly to the driving circuits.

Furthermore, since the video lead-out lines 130 are so formed to converge towards the corresponding driving circuit among a plurality of driving circuits (not shown), the video lead-out lines 130 vary in length. In this embodiment, the video lead-out lines 130 to be connected to the corresponding driving circuit among a plurality of driving circuits are formed in such a way that the central video lead-out line 130 is the shortest and, the more towards the side the video lead-out line 130 is located, the longer the length thereof becomes. As a result, the resistance is different, in general, line by line among the video lead-out lines 130. However, the video lead-out line 130 is composed of a wider portion 132 and a narrower portion 133; the ratio between the wider portion 132 and the narrower portion 133 for each video lead-out line 130 is made different; and the ratio of the narrower portion 133 increases as the location of the video lead-out line 130 shifts from the side towards the center. As a result of this, it is possible to make a resistance value of each video lead-out line 130 equal to one another. In other words, the video lead-out line 130 is made up of the wider portion 132 and the narrower portion 133, and the resistance value of the wider portion 132 is smaller and the resistance value of the narrower portion 133 is larger. At the same time, because the ratio between the wider portion 132 and the narrower portion 133 is made different for each video lead-out line 130, it is possible to adjust the resistance value for each video lead-out line 130.

Moreover, liquid crystal is sandwiched between the first substrate 101 and a second substrate (not shown), and the two substrates are bonded together. During this process, a sealing material for bonding the two substrates is applied to a border line 134 indicated by alternate long and short dashed lines in Fig. 10. This means that parts of the video lead-out lines 130, i.e., portions located outside of the border line 134 (towards the side of the terminals 131), will be exposed to the environment. Here, the second substrate is such that has a layer of a color filter that corresponds to the pixel of the first substrate 101. The grooves 108b that are formed next to the video lead-out lines 130 are formed so as to extend as far as to the border line 134. This means that, when the first substrate 101 and the second substrate are bonded together, the grooves 108b are formed and contained within an area in which the grooves 108b are not exposed to the environment, and, therefore, the grooves 108b are not formed in an area exposed to the environment. Since the driving circuits are, in general, connected by way of the terminals 131, and a clearance between the driving circuits and the second substrate is covered by resin or the like, even if the grooves 108b are exposed to the environment, the grooves 108b will be finally cut off from the open air. This does not necessarily mean that the grooves 108b are not exposed to the open air before the clearance between the driving circuits and the second substrate is covered by resin or the like. Therefore, it is possible that the cut surface of the residue produced when the grooves 108b are formed will be exposed to the open air and that corrosion of the video lead-out lines 130 will develop through the cut surface. In general, Al has a lower resistance value than Cr. For this reason, Al is often used in order to reduce the resistance in wiring in a large-size liquid crystal display device. Contrary, Al is more prone to corrosion than Cr. Because of this reason, it is possible to protect the video lead-out lines 130 against corrosion that will otherwise develop through the cut surface of the residue, if the grooves 108b are formed within an area that will not be exposed to the environment when the first substrate 101 and the second substrate are bonded together.

In addition, the narrower portion 133 is arranged towards the side of the terminals 131 so that the narrower portion 133 is formed outside the border line 134. In this structure, the narrower portion 133, with which gaps between the adjacent video lead-out lines 130 are made larger, is formed in an area where the grooves 108b do not exist. As a result, the gaps between the adjacent video lead-out lines 130 are made wider than the case in which the wider portion 132 is formed in an area where the grooves do not exist, which eventually reduces a risk of short circuit.

Similar structure is applicable to the scan lines 102. Not only do the video lines 103 have the video lead-out lines 130 that extend towards the side of the driving circuits, but also the video lines 103, in some cases, extend in the direction opposite thereto towards outside of the pixel area 104 and are connected by way of nonlinear elements to so-called short rings for preventing an electrostatic discharge damage from occurring. In this case, in order to prevent short circuits from being caused by the residue after etching, in addition to arranging the grooves 108b on the side where the video lead-out lines 130 are arranged, it is also possible to arrange the grooves 108b next to the video lines 103 that extend to the other side and outside the pixel area.

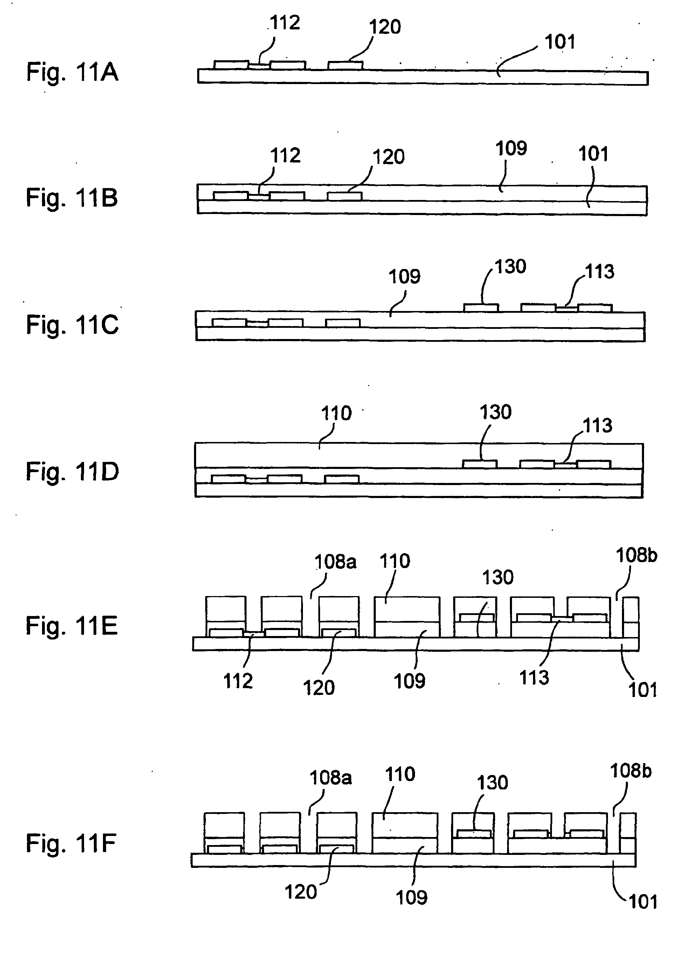

Next, a process of forming layers shown as a cross section along line C-C' shown in Fig. 8 will be described with reference to Fig. 11. In Fig. 11A, Al is laid on the first substrate 101 which is a substrate of glass or the like, and the scan lead-out lines 120 are formed through an exposure and etching process. Reference numeral 112 represents a residue produced as a result of faulty etching. It is also shown that the adjacent scan lead-out lines 120 are short-circuited together by the residue 112.

In Fig. 11B, a gate insulation film 109 is laid on the first substrate 101 and the scan lead-out lines 120. Then, a semiconductor layer is laid on the gate insulation film 109, and an insular shaped semiconductor layer (not shown) is cropped out by etching and formed at a place facing the gate electrode.

In Fig. 11 C, Al layer is formed on the gate insulation film 109, and the video lead-out lines 130, the source electrode, the drain electrode (not shown), and the like are formed through exposure and etching. Reference numeral 113 represents a residue left as a result of faulty etching, and the adjacent video lead-out lines 130 are short-circuited together by the residue 113.

In Fig. 11D, a protective film 110 comprising an insulating material is laid on top of the gate insulation film 109 and the video lead-out lines 130.

In Fig. 11E, a contact hole (not shown) is formed at a predetermined place through the protective film 110 or the gate insulation film 109 by performing an etching process. During this process, the grooves 108a are formed next to the scan lead-out lines 120 and the grooves 108b are formed next to the video lead-out lines 130 respectively. In doing so, because the residues 112 and 113 which are made of Al can not be etched during the etching process for the protective film 110, the residues 112 and 113 are left intact and exposed in the grooves. In other words, these grooves 108a and 108b penetrate through at least the protective film 110 and the gate insulation film 109 which are laid on or over the scan lead-out lines 120 and the video lead-out lines 130, and are purposed for exposing the residues 112 and 113 out from the protective film 110 or the gate insulation film 109. Although, as shown in Fig. 11E, the grooves 108b are formed in the gate insulation film 109 where the residue 113 does not exist, it is possible to form the grooves 108b so as to penetrate only through the protective film 110 by devising an appropriate etching method.

In Fig. 11F, IZO layer is formed on the protective film 110, and the pixel electrodes 106 and the terminals 131 (not shown) are formed in predetermined shapes respectively by exposure and etching. During this process, because the etchant used for removing IZO can also remove Al, the residues 112 and 113 left in the grooves 108a and 108b are also removed. Thereafter, an alignment film (not shown) is laid on top of the pixel electrode 106 (not shown) and the protective film 110. In general, it is difficult to etch Cr and IZO simultaneously if this combination is actually used. However, because Al and IZO can be etched by the same etchant, it is possible, without taking a trouble of arranging an extra process, to etch the residues 112 and 113 by forming the scan lead-out lines 120 and the video lead-out lines 130 by using Al, and forming the pixel electrode 106 by using IZO. As described, according to the present invention, it is not necessary to arrange a dedicated process for removing the residues left in the grooves 108a and 108b, because the residues 112 and 113 can be removed during the process of forming the pixel electrode 106.

Of course, without departing from the spirit or scope of the invention, other types of embodiments than those defined hereinbefore are also possible. For example, in the embodiments, although the scan lines and the video lines are formed of Al, and the pixel electrode is formed of IZO, other combinations of materials can be used for the pixel electrode, the scan lines, and the video lines as long as they can be etched all at the same time. Although the example described above is for forming the scan lines 102 and the video lines 103 by using Al, a multilayer structure of Al, Mo, or the like is also possible if compatibility in electrical connection with IZO is taken into account. Furthermore, it is not necessary to remove the residues from the grooves at the same time when the pixel electrode is formed. For example, if the pixel electrode is formed by using ITO, then the residues will be removed by another etching process after etching ITO. If the scan lead-out lines 120 and the video lead-out lines 130 are formed by using different materials from each other, it is also possible to remove the residues thereof by performing separate etching processes. Moreover, although the MVA type and the TN type have been described in the embodiments, the invention is also applicable to other types.

### Industrial applicability

According to one aspect of the present invention, the grooves are formed in the protective film and between the adjacent video lines or in the pixel electrode close to the edges thereof instead of forming the grooves between the pixel electrode and the video line. Then, the residues resulting from the video lines or the like being etched insufficiently are removed by way of the grooves. Accordingly, it is possible to remove residues of the video lines or the like from the grooves and prevent a short circuit that will be otherwise caused between the residues and other lines, even if the pixel electrode is made so large that it overlaps with the video line or the light-shielding film is formed between the pixel electrode and the video line.

Furthermore, by forming the scan lines and the video lines by using Al and forming the pixel electrode by using IZO, it becomes possible to etch each metal with the same etchant and simplify the manufacturing process.

Moreover, the grooves are formed next to the lead-out lines that extend from the scan lines or the video lines to the driving circuit, and the residues that are produced and left between the adjacent lead-out lines because of faulty etching can be removed by way of the grooves. Therefore, it is possible to prevent a short circuit from being established between the adjacent lead-out lines.

Furthermore, even in case the gaps lying between the adjacent lead-out lines are made smaller and, as a result, a risk of a short circuit being established between the adjacent lead-out lines becomes higher, the residues can be removed. Consequently, it is possible to produce the liquid crystal display devices of larger sizes, smaller sizes, or higher resolutions.

In addition, since a work by which short-circuited portions of the lead-out lines are removed during a repair process is not required as an extra work, it is possible to shorten and simplify the repair process and, thereby, reduce cost.

As described, the liquid crystal display device of the present invention has the aforementioned advantages and can be used not only for portable terminals and television monitors, but also for various types of appliances that require a display.

## Claims

1. A liquid crystal display device comprising:
a pair of substrates having liquid crystal sealed therebetween;
pixel electrodes arranged in a matrix-like formation on one of the substrates;
switching elements connected to the pixel electrodes;
a plurality of video lines connected to the switching elements and laid substantially parallel to one another;
a plurality of scan lines connected to the switching elements and laid perpendicular to the video lines; and
a protective film interposed between the video lines and the pixel electrodes,
wherein two video lines are laid side by side between the pixel electrodes, and
a groove is formed in the protective film between the two adjacent video lines.

2. A liquid crystal display device as claimed in claim 1,
wherein each of the pixel electrodes is connected to two of the switching elements.

3. A liquid crystal display device as claimed in claim 1,
wherein, as seen from a direction normal to the substrates, the groove is formed along the video lines except in an area where the scan lines are laid.

4. A liquid crystal display device as claimed in claim 1,
wherein a gate insulation film is interposed between the video lines and the scan lines, and
a groove is formed in the gate insulation film at a place corresponding to the groove formed in the protective film.

5. A liquid crystal display device as claimed in claim 1,
wherein the video lines and the pixel electrodes are formed by using such materials that can be removed by an identical etchant.

6. A liquid crystal display device as claimed in claim 1,
wherein the scan lines and the video lines are formed of Al, and
the pixel electrodes are formed of IZO.

7. A liquid crystal display device comprising:
a pair of substrates having liquid crystal sealed therebetween;
pixel electrodes arranged in a matrix-like formation on one of the substrates;
switching elements connected to the pixel electrodes;
a plurality of video lines connected to the switching elements and laid substantially parallel to one another;
a plurality of scan lines connected to the switching elements and laid perpendicular to the video lines; and
a protective film interposed between the video lines and the pixel electrodes,
wherein a first groove is formed substantially parallel to the video lines in the pixel electrode near edges thereof, and
a second groove is formed in the protective film at a place corresponding to the first groove.

8. A liquid crystal display device comprising:
a pair of substrates having liquid crystal sealed therebetween;
pixel electrodes arranged in a matrix-like formation on one of the substrates;
switching elements connected to the pixel electrodes;
a plurality of video lines connected to the switching elements and laid substantially parallel to one another;
a plurality of scan lines connected to the switching elements and laid perpendicular to the video lines; and
a protective film interposed between the video lines and the pixel electrodes,
wherein a first groove is formed substantially parallel to the video lines in the pixel electrode near edges thereof,
a second groove is formed in the protective film at a place corresponding to the first groove,
a light-shielding film is formed on said one of the substrates so as to be positioned between the video lines and the pixel electrodes and in an identical plane as the scan lines, and
the first groove and the second groove are positioned closer to a center of a pixel than the light-shielding film.

9. A liquid crystal display device as claimed in claim 7 or 8,
wherein a gate insulation film is interposed between the video lines and the scan lines, and
a groove is formed in the gate insulation film at a place corresponding to the groove formed in the protective film.

10. A liquid crystal display device as claimed in claim 9,
wherein the video lines and the pixel electrodes are formed by using such materials that can be removed by an identical etchant.

11. A liquid crystal display device as claimed in claim 10,
wherein the scan lines and the video lines are formed of Al, and
the pixel electrodes are formed of IZO.

12. A liquid crystal display device comprising:
a plurality of wiring lines comprising a conductive material and formed on one of substrates;
a protective film laid on the wiring lines;
a pixel area comprising a plurality of pixels each of which having a pixel electrode; and
another of the substrates facing said one of the substrates with liquid crystal sandwiched therebetween,
wherein grooves are formed in the protective film next to the wiring lines outside the pixel area on said one of the substrates.

13. A liquid crystal display device as claimed in claim 12,
wherein the grooves are formed between the wiring lines adjacent to each other.

14. A liquid crystal display device as claimed in claim 12,
wherein the grooves are formed at such a place where, when said one and another of the substrates are bonded together, the grooves are not exposed to open air.

15. A liquid crystal display device as claimed in one of claims 12, 13, and 14,
wherein the wiring lines are formed of Al, and
the pixel electrode is formed of IZO.

16. A liquid crystal display device comprising:
a pair of substrates having liquid crystal sealed therebetween;
a plurality of wiring lines comprising a conductive material and formed on one of said pair of substrates;
lead-out lines for feeding signals to the wiring lines and extending from the wiring lines to driving circuits;
a protective film laid on the lead-out lines; and
a pixel area comprising a plurality of pixels,
wherein the lead-out lines are formed outside the pixel area, and
grooves are formed in the protective film next to the lead-out lines.

17. A liquid crystal display device as claimed in claim 16,
wherein the grooves are formed between the lead-out lines adjacent to each other.

18. A liquid crystal display device as claimed in claim 17,
wherein the lead-out lines comprise a wider portion thereof and a narrower portion thereof.

19. A liquid crystal display device as claimed in claim 18,
wherein a ratio between the wider portion and the narrower portion varies for each of the lead-out lines.

20. A liquid crystal display device as claimed in claim 19,
wherein each of the lead-out lines extending from each of said plurality of wiring lines to one of the driving circuits corresponding thereto is arranged such that the ratio of the narrower portion thereof increases gradually as a length of the lead-out line becomes shorter.

21. A liquid crystal display device as claimed in claim 20,
wherein said one and another of the pair of substrates are bonded together so that the grooves are formed at a place that is not exposed to open air.

22. A liquid crystal display device as claimed in claim 18,
wherein the narrower portion is formed in an area that is exposed to open air.

23. A liquid crystal display device as claimed in one of claims 16 to 22,
wherein the wiring lines comprise scan lines and video lines,
the lead-out lines comprise scan lead-out lines extending from the scan lines and video lead-out lines extending from the video lines,
the scan lines and the video lines intersect with each other, and
switching elements connected to the scan lines and the video lines, and pixel electrodes connected to the switching elements are formed in an area where the scan lines and the video lines intersect with each other.

24. A liquid crystal display device as claimed in claim 23,
wherein the scan lead-out lines and the video lead-out lines are formed of Al, and
the pixel electrodes are formed of IZO.

25. A method for fabricating a liquid crystal display device comprising:
forming a plurality of scan lead-out lines by using a conductive material on an insulating substrate;
forming an insulation film on the insulating substrate and the scan lead-out lines;
forming a plurality of video lead-out lines by using the conductive material on the insulation film;
laying a protective film on the insulation film and the video lead-out lines;
forming, next to the scan lead-out lines, grooves penetrating through the insulation film and the protective film;
forming, next to the video lead-out lines, grooves penetrating through the protective film; and
forming, on the protective film, a transparent film possessing conductivity,
wherein the conductive materials exposed in the grooves formed next to the scan lead-out lines and in the grooves formed next to the video lead-out lines are removed by etching.

26. A method for fabricating a liquid crystal display device as claimed in claim 25,
wherein the conductive material is Al and the transparent film possessing conductivity is formed of IZO, and
the conductive materials exposed in the grooves are also removed through a etching process that is performed for etching said IZO.

27. A liquid crystal display device comprising:
a pair of substrates having liquid crystal sealed therebetween;
a pixel area comprising a plurality of pixels having individual pixel electrodes arranged in a matrix-like formation on one of the substrates;
switching elements connected to the pixel electrodes;
a plurality of wiring lines comprising, a plurality of video lines connected to the switching elements and laid substantially parallel to one another, and a plurality of scan lines connected to the switching elements and laid perpendicular to the video lines;
an insulation film formed on the scan lines; and
a protective film formed on the video lines,
wherein, in the pixel area, two video lines are laid side by side between the pixel electrodes and a groove is formed in the protective film between the two adjacent video lines, and,
outside the pixel area, grooves are formed in the protective film next to the wiring lines on said one of the substrates.

28. A liquid crystal display device comprising:
a pair of substrates having liquid crystal sealed therebetween;
a pixel area comprising a plurality of pixels having individual pixel electrodes arranged in a matrix-like formation on one of the substrates;
switching elements connected to the pixel electrodes;
a plurality of wiring lines comprising, a plurality of video lines connected to the switching elements and laid substantially parallel to one another, and a plurality of scan lines connected to the switching elements and laid perpendicular to the video lines;
an insulation film formed on the scan lines; and
a protective film formed on the video lines,
wherein a first groove is formed substantially parallel to the video lines in the pixel electrode near edges thereof and a second groove is formed in the protective film in an area thereof corresponding to the first groove, and
another groove is formed in the protective film next to each of the wiring lines outside the pixel area.

29. A liquid crystal display device comprising:
a pair of substrates having liquid crystal sealed therebetween;
a pixel area comprising a plurality of pixels having individual pixel electrodes arranged in a matrix-like formation on one of the substrates;
switching elements connected to the pixel electrodes;
a plurality of wiring lines comprising, a plurality of video lines connected to the switching elements and laid substantially parallel to one another, and a plurality of scan lines connected to the switching elements and laid perpendicular to the video lines;
lead-out lines for feeding signals to the wiring lines and extending from the wiring lines to driving circuits;
an insulation film formed on the scan lines; and
a protective film formed on the vide lines,
wherein, in the pixel area, two video lines are laid side by side between the pixel electrodes and a groove is formed in the protective film between the two adjacent video lines, and,
the lead-out lines are formed outside the pixel area and another groove is formed in the protective film next to each of the lead-out lines.

30. A liquid crystal display device comprising:
a pair of substrates having liquid crystal sealed therebetween;
a pixel area comprising a plurality of pixels having individual pixel electrodes arranged in a matrix-like formation on one of the substrates;
switching elements connected to the pixel electrodes;
a plurality of wiring lines comprising, a plurality of video lines connected to the switching elements and laid substantially parallel to one another, and a plurality of scan lines connected to the switching elements and laid perpendicular to the video lines;
lead-out lines for feeding signals to the wiring lines and extending from the wiring lines to driving circuits;
an insulation film formed on the scan lines; and
a protective film formed on the vide lines,
wherein a first groove is formed substantially parallel to the video lines in the pixel electrode near edges thereof and a second groove is formed in the protective film in an area thereof corresponding to the first groove, and
the lead-out lines are formed outside the pixel area and another groove is formed in the protective film next to each of the lead-out lines.
